# EUROPÄISCHE PATENTSCHRIFT

(11) **EP 1 341 859 B1**
(45) Veröffentlichungstag und Bekanntmachung des Hinweises auf die Patenterteilung: **16.08.2006**
(21) Anmeldenummer: 01994737.3
(22) Anmeldetag: 27.11.2001
(51) Int. Cl.: C09D 163/00, C08G 59/50, C09D 5/02, C09D 5/03, C08J 3/05

(54) **STEINSCHLAGSCHUTZGRUNDIERUNG, VERFAHREN ZU IHRER HERSTELLUNG UND IHRE VERWENDUNG**
STONE IMPACT PROTECTION PRIMER, METHOD FOR PRODUCING THE SAME AND USE THEREOF
PRIMAIRE DE PROTECTION CONTRE LES GRAVILLONS, SON PROCEDE DE PRODUCTION ET SON UTILISATION

(30) Priorität: 27.11.2000 DE 10058870
(43) Veröffentlichungstag der Anmeldung: 10.09.2003
(73) Patentinhaber: BASF Coatings AG, 48165 Münster (DE)
(72) Erfinder: GROSS, Lutz-Werner, 45721 Haltern (DE); MOORKAMP, Ludwig, 48165 Münster (DE); GRUMPE, Heinz-Ulrich, 48308 Senden (DE)
(86) Internationale Anmeldenummer: PCT/EP2001/013793
(87) Internationale Veröffentlichungsnummer: WO 2002/042387

(56) Entgegenhaltungen:
- WO-A-94/06876
- WO-A-97/17390
- WO-A-99/50359
- US-A- 4 263 352
- US-A- 4 315 044
- US-A- 4 555 412

## Beschreibung

Die vorliegende Erfindung betrifft eine neue Steinschlagschutzgrundierung. Außerdem betrifft die vorliegende Erfindung ein neues Verfahren zur Herstellung der neuen Steinschlagschutzgrundierung. Des weiteren betrifft die vorliegende Erfindung die Verwendung der neuen Steinschlagschutzgrundierung für PKW und Nutzfahrzeuge.

Steinschlagschutzgrundierungen und Beschichtungsstoffe, aus denen sie hergestellt werden, sind bekannt. Die Steinschlagschutzgrundierungen sind hoch elastische Zwischengründe, die den Schutz der exponierten Oberflächen von PKW und Nutzfahrzeugen vor Steinschlag übemehmen. Üblicherweise werden sie aus Beschichtungsstoffen auf Basis von Polyesterharzen als Bindemittel und Melaminharzen oder Polyisocyanaten als Vemetzungsmittel hergestellt. Diese Beschichtungsstoffe bereiten aber bei der Herstellung dickschichtiger Massen Probleme. In den besonders steinschlaggefährdeten Bereichen von Karosserien wie Unterboden oder Radkästen ist aber die Verwendung dickschichtiger Massen notwendig. Diese müssen neben hoher Kälte- und Dauerelastizität eine gute Abriebfestigkeit aufweisen und dürfen nicht empfindlich gegen Feuchtigkeit sein. Verwendet werden hierfür überwiegend PVGbasierende Materialien und in untergeordnetem Maße solche auf Bitumen-Basis. Die Schichtdicken liegen im allgemeinen zwischen 500 und 1.500 µm. Diese Steinschlagschutzgrundierung werfen aber bei der Entsorgung zahlreiche Probleme auf. Es werden daher neuerdings die Radkästen mit Innenformteilen aus Kunststoff ausgekleidet, die aber für jede Karosserie speziell angefertigt werden müssen.

Bei der Lösung der Probleme, die mit den üblichen und bekannten Steinschlagschutzgrundierungen verbunden sind, haben die Beschichtungsstoffe, die wasserverdünnbare Epoxidharzdispersionen und Polyacrylatdispersionen als Bindemittel und wasserverdünnbare Polyamine als Härter enthalten, einen wesentlichen Fortschritt gebracht. Diese wäßrigen Beschichtungsstoffe sind lagerstabil und lassen sich leicht aus den Applikationsanlagen rückstandsfrei entfemen und problemlos entsorgen. Sie lassen sich desweiteren problemlos in hoher Schichtdicke applizieren und liefem Steinschlagschutzgrundierungen, die bei einer Schichtdicke von 500 µm auch nach Wasserlagerung im VDA-Steinschlagtest bis zu 100 Kilogramm Stahlsplitt bis zum Durchschlag auf das Substrat verkraften. Trotz der Vorteile, die diese bekannten wäßrigen Beschichtungsstoffe bieten, können sie noch weiter verbessert werden, um den stetig steigenden Ansprüchen der Hersteller von PKW und Nutzfahrzeugen sowie deren Kunden gerecht zu werden.

Aus der US 4,555,412 sind wäßrige Beschichtungsstoffe enthaltend ein festes Epoxidharz und Polyamin als Härter bekannt. Diese Beschichtungsstoffe enthalten hohe Mengen Epoxidharz (Aus den Beispielen berechnen sich Epoxidharzgehalte von über 40 Gew.-%.).

Aufgabe der vorliegenden Erfindung ist es, eine neue Steinschlagschutzgrundierung enthaltend einen wäßrigen Beschichtungsstoff auf Basis von wasserverdünnbaren Epoxidharzdispe,rsionen und physikalisch härtenden Polymerdispersionen als Bindemittel und wasserverdünnbaren Polyaminen als Härter bereitzustellen, die weiterhin die Vorteile des bekannten Beschichtungsstoffs aufweist, die aber in der Standsicherheit weiter verbessert ist. Außerdem sollen die neuen Steinschlagschutzgrundierungen bei der Verwendung für PKW und Nutzfahrzeuge eine verbesserte Schutzwirkung haben. Außerdem soll die neue Steinschlagschutzgrundierung in einfacher Weise herstellbar sein.

Demgemäß wurde die neue Steinschlagschutzgrundierung enthaltend einen wäßriger Beschichtungsstoff gefunden, der mindestens ein Epoxidharz als Bindemittel und mindestens ein Polyamin als Härter enthält, wobei das Epoxidharz oder mindestens eines der Epoxidharze
(i) als solches bei Raumtemperatur fest ist und/oder in einem Pulverlack vorliegt, wobei
(ii) das feste Epoxidharz und/oder der epoxidharzhaltige Pulverlack in einer wäßrigen Dispersion, enthaltend das Polyamin oder die Polyamine, feinteilig dispergiert ist oder sind,
wobei, unabhängig davon, ob der wäßrige Beschichtungsstoff ein Einkomponentensystem oder ein Mehrkomponentensystem darstellt, das feste Epoxidharz und/oder der epoxidharzhaltigen Pulverlack in einer Menge enthalten ist, die, bezogen auf seinen Festkörper, 2 bis 30, bevorzugt 3 bis 25 und insbesondere 4 bis, 20 Gew.-% an Epoxidharz als Reaktivkomponente entspricht.

Im folgenden wird der in den neuen Steinschlagschutzgrundierung enthaltene wäßrige Beschichtungsstoff als "erfindungsgemäßer Beschichtungsstoff" bezeichnet.

Außerdem wurde das neue Verfahren zur Herstellung des neuen Steinschlagschutzgrundierung enthaltend den erfindungsgemäßen Beschichtungsstoff gefunden, bei dem man mindestens ein feinteiliges, bei Raumtemperatur festes Epoxidharz und/oder mindestens einen epoxidharzhaltigen Pulverlack in der Gegenwart mindestens eines Polyamins in einem wäßrigen Medium dispergiert.

Im folgenden wird dieses neue Verfahren als "erfindungsgemäßes Verfahren" bezeichnet.

Weitere erfindungsgemäße Gegenstände ergeben sich aus der Beschreibung.

Im Hinblick auf den Stand der Technik war es überraschend und für den Fachmann nicht vorhersehbar, daß die der vorliegenden Erfindung zugrundeliegende Aufgabe durch die Zugabe feinteiliger fester Epoxidharze und/oder epoxidharzhaltiger Pulverlacke zu wäßrigen polyaminhaltigen Dispersionen gelöst werden konnte. Hierbei war insbesondere überraschend, daß durch die erfindungsgemäße Maßnahme die Lagerstabilität der resultierenden erfindungsgemäßen Beschichtungsstoffe nicht in Mitleidenschaft gezogen wurde, sondern in vollem Umfang erhalten blieb.

In einer ersten bevorzugten Ausführungsform ist der erfindungsgemäße Beschichtungsstoff ein Einkomponentensystem, in dem alle Reaktivkomponenten, d. h. die Epoxidharze und die Polyamine, nebeneinander vorliegen. Vorzugsweise werden hierbei ausschließlich Epoxidharze, die bei Raumtemperatur fest sind, und/oder epoxidharzhaltige Pulverlacke verwendet.

In einer zweiten bevorzugten Ausführungsform ist der erfindungsgemäße Beschichtungsstoff ein Mehrkomponentensystem, insbesondere ein Zweikomponentensystem, enthaltend
(A) mindestens eine polyaminhaltige wäßrige Dispersion oder Lösung als Härterkomponente und
(B) mindestens eine epoxidharzhaltige wäßrige Dispersion als Bindemittelkomponente,
worin das feste Epoxidharz und/oder der epoxidharzhaltige Pulverlack in der Härterkomponente (A) feinteilig dispergiert vorliegt oder vorliegen.

Vorzugsweise enthält die epoxidharzhaltige wäßrige Dispersion (B) mindestens ein übliches und bekanntes flüssiges Epoxidharz, das eine hohe Reaktivität gegenüber Polyaminen aufweist.

Wird das feste Epoxidharz alleine verwendet, ist es in dem erfindungsgemäßen Beschichtungsstoff in einer Menge von 2 bis 30, bevorzugt 3 bis 25 und insbesondere 4 bis 20 Gew.-%, jeweils bezogen auf den Festkörper des Beschichtungsstoffs, enthalten.

Wird der epoxidharzhaltige Pulverlack alleine verwendet, ist er in dem erfindungsgemäßen Beschichtungsstoff vorzugsweise in einer Menge von 5 bis 30, bevorzugt 6 bis 25 und insbesondere 7 bis 20 Gew.-%, jeweils bezogen auf den Festkörper des Beschichtungsstoffs, enthalten.

Vorzugsweise enthält der epoxidharzhaltige Pulverlack mindestens ein Epoxidharz in einer Menge von mindestens 40, bevorzugt mindestens 45 und insbesondere mindestens 50 Gew.-%, jeweils bezogen auf den Pulverlack. Die Obergrenze ist hierbei nicht kritisch. Im allgemeinen liegt sie bei 70 bis 80 Gew.-%, bezogen auf den Pulverlack. Durch diesen Gehalt an Epoxidharzen ist sichergestellt, daß durch den Pulverlack genügend Epoxidharz als Reaktivkomponente in den Beschichtungsstoff eingebracht wird.

Für den erfindungsgemäßen Beschichtungsstoff ist es von Vorteil, wenn die festen Epoxidharze oder die epoxidharzhaltigen Pulverlacke eine Teilchengröße < 70, bevorzugt < 50 und insbesondere < 30 µm aufweist. Weitere Vorteile resultieren, wenn die festen Epoxidharze epoxidharzhaltigen Pulverlacke eine mittlere Teilchengröße von 3 bis 35, bevorzugt 3 bis 20 und insbesondere 3 bis 15 µm haben.

Sofern ihre Lagerstabilität gewährleistet ist, ist die Zusammensetzung der festen Epoxidharze ist nicht kritisch, sondern es können alle üblichen und bekannten hochmolekularen festen Epoxidharze auf der Basis von Bisphenol A und F mit einem zahlenmittleren Molekulargewicht von 1.000 bis 10.000 Dalton verwendet werden. Diese festen Epoxidharze werden üblicherweise in thermisch härtbaren lösemittelhaltigen Lacken oder Pulverlacken eingesetzt (vgl. Römpp Lexikon Lacke und Druckfarben, Georg Thieme Verlag, Stuttgart, New York, 1998, Seiten 196 und 197, »Epoxidharze«). Es sind handelsübliche Produkte, die beispielsweise von der Firma DOW unter dem Handelsnamen DOW® DER 662 oder DOW® E.R. 642 U-20 vertrieben werden.

Auch die Zusammensetzung der epoxidharzhaltigen Pulverlacke ist nicht kritisch, sofern ihre Lagerstabilität gewährleistet ist, sondern es können alle üblichen und bekannten, am Markt erhältlichen epoxidharzhaltigen Pulverlacke verwendet werden, solange sie die vorstehend beschriebenen Bedingungen erfüllen. Beispiele geeigneter Pulverlacke dieser Art werden beispielsweise in der ProduktInformation der Firma BASF Lacke + Farben AG, "Pulverlacke", 1990 oder der Firmenschrift von BASF Coatings AG "Pulverlacke, Pulverlacke für industrielle Anwendungen", Januar 2000, oder Römpp Lexikon Lacke und Druckfarben, Georg Thieme Verlag, Stuttgart, New York, .1998, Seiten 198 und 199, »Epoxidharz-Pulverlacke« beschrieben.

Als Polyamine kommen alle aliphatischen, cycloaliphatischen oder aromatischen, vorzugsweise aliphatischen und/oder cycloaliphatischen Amine mit mindestens zwei primären und/oder sekundären Aminogruppen im Molekül in Betracht, wie sie üblicherweise für die Härtung von Epoxidharzen verwendet werden (vgl. Römpp Lexikon Lacke und Druckfarben, Georg Thieme Verlag, Stuttgart, New York,1998, Seite 458, »Polyamine«). Der Gehalt des erfindungsgemäßen Beschichtungsstoffs an Polyaminen kann sehr breit variieren und richtet sich in erster Linie nach der Anzahl der vorhandenen Epoxidgruppen. Vorzugsweise liegt der Gehalt bei 1 bis 15, bevorzugt 1,2 bis 12 und insbesondere 1,3 bis 10 Gew.-%, jeweils bezogen auf den Festkörper des erfindungsgemäßen Beschichtungsstoffs.

Die in der Komponente (B) des erfindungsgemäßen Mehrkomponentensystems enthaltenen Epoxidharze sind übliche und bekannte, am Markt erhältliche niedermolekulare Epoxidharze mit einem zahlenmittleren Molekulargewicht von 400 bis 2.000 Dalton. Diese Epoxidharze können flüssig oder in Form von feinteiligen Dispersionen eingesetzt werden. Die feinteiligen Dispersionen haben eine mittlere Teilchengröße von <1 µm.

Außer den vorstehend beschriebenen Bestandteilen enthält der erfindungsgemäße Beschichtungsstoff vorzugsweise noch mindestens eine physikalisch härtbare wäßrige Polymerdispersion.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig.

Beispiele geeigneter physikalisch härtbarer Polymerdispersionen sind Polyacrylatdispersionen oder Styrol-Butadien-Copolymerisatdispersionen eines Festkörpergehalts von 10 bis 80 Gew.-%. Vorzugsweise weisen die physikalisch härtbaren Polymerdispersionen keine funktionellen Gruppen auf, die mit den Reaktivkompönenten der erfindungsgemäßen Beschichtungsstoffe reagieren. Vorzugsweise sind die physikalisch härtbaren Polymerdispersionen in den erfindungsgemäßen Beschichtungsstoffen in einer Menge von 10 bis 60, bevorzugt 15 bis 55 und insbesondere 20 bis 50 Gew.-%, jeweils bezogen auf den Festkörper des erfindungsgemäßen Beschichtungsstoffs, enthalten.

Darüber hinaus enthalten die erfindungsgemäßen Beschichtungsstoffe übliche und bekannte Füllstoffe und Pigmente, vorzugsweise anorganische farbgebende Pigmente in den für Steinschlagschutzgrundierungen üblichen Mengen.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenöxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Darüber hinaus kann der erfindungsgemäße Beschichtungsstoff sonstige farb- und/oder elektrisch leitfähige oder magnetisch abschirmende Pigmente und/oder lösliche Farbstoffe enthalten.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpiamente, Isoindolinonpigmente, Azomethinpigmente, Thioindigopigmente, Metallkomplexpigmente, Perinonpigmente, Perylenpigmente, Phthalocyaninpigmente oder Anilinschwarz.

Beispiele für geeignete elektrisch leitfähige Pigmente sind Titandioxid/Zinnoxid-Pigmente.

Beispiele für geeignete magnetisch abschirmende Pigmente sind Pigmente auf der Basis von Eisenoxiden oder Chromdioxid.

Geeignete lösliche organische Farbstoffe sind lichtechte organische Farbstoffe mit einer geringen oder nicht vorhandenen Neigung zur Migration aus den Füllern und den Basislacken und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethiu-Pigmente«, »Azopigmente«, und Seite 379, »Metallkomplex-Pigmente«, verwiesen.

Des weiteren kann der erfindungsgemäße Beschichtungsstoff Zusatzstoffe wie niedrig siedende organische Lösemittel und hochsiedende organische Lösemittel ("lange Lösemittel"), UV-Absorber, Lichtschutzmittel, Radikalfänger, Entschäumer, Emulgatoren, Netz- und Dipergiermittel, Verlaufmittel, rheologiesteuemde Additive (Verdicker), Flammschutzmittel, Trockungsmittel, Hautverhinderungsmittel, Korrosionsinhibitoren und/oder Wachse in üblichen und bekannten, wirksamen Mengen enthalten.

Beispiele geeigneter niedrigsiedender organischer Lösemittel und hochsiedender organischer Lösemittel ("lange Lösemittel") sind Alkohole wie Methanol, Ethanol, Propanol, Isopropanol, n-Butanol, sec.-Butanol, tert.-Butanol, Amylalkohol, Isoamylakohol, 1-Hexanol, 1-Heptanol, 1-Octanol, 2-Octanol, Isooctanol, 1-Nonanol, 1-Decanol, 2-Decanol, 1-Undecanol, 1-Dodecanol, 1-Tridecanol, 2-Tridecanol, Ethylglykol, Ethyldiglykol, Methylglykol, Methyldiglykol, Propylglykol, Propyldiglykol, Butylglykol oder Butyldiglykol oder Diole wie Ethylenglykol, Diethylenglykol, Propylenglykol, Dipropylenglykol, die Butylenglykole oder Dibutylenglykol, Amide wie N-Methylpyrrolidon oder Xylole oder Gemische aromatischer und/oder aliphatischer Kohlenwasserstoffe wie Solventnaphtha®, Benzin 135/180, Dipentene oder Solvesso®.

Beispiele geeigneter Emulgatoren sind nicht ionische Emulgatoren, wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und-Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Beispiele geeigneter rheologiesteuernder Additive (Verdicker) sind anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden.

Weitere Beispiele für die vorstehend aufgeführten Zusatzstoffe sowie Beispiele geeigneter UV-Absorber, Radikalfänger, Verlaufmittel, Flammschutzmittel, Trocknungsmittel, Hautverhinderungsmittel, Korrosionsinhibitoren und Wachse werden in dem Lehrbuch »Lackadditive« von Johan Bieleman, Wiley-VCH, Weinheim, New York, 1998, im Detail beschrieben.

Die erfindungsgemäßen Beschichtungsstoffe bzw. die in den erfindungsgemäßen Mehrkomponentensystemen eingesetzte Härterkomponente (A) können mit Hilfe beliebiger geeigneter Verfahren hergestellt werden. Vorzugsweise wird das erfindungsgemäße Verfahren angewandt. Hierbei wird mindestens ein feinteiliges, bei Raumtemperatur festes Epoxidharz und/oder mindestens ein epoxidharzhaltiger Pulverlack in der Gegenwart eines Polyamins in einem wäßrigen Medium dispergiert. Die Komponenten werden in einer solche Mengen eingesetzt, daß die vorstehend beschriebenen Zusammensetzungen resultieren. Bei dem wäßrigen Medium kann es sich um Wasser handeln. Es können aber auch Gemische aus Wasser und geringen Mengen an lacküblichen organischen Lösemitteln wie Butyldiglykol verwendet werden. Bei der Durchführung des erfindungsgemäßen Verfahrens können außerdem die vorstehend beschriebenen Zusatzstoffe in die erfindungsgemäßen Beschichtungsstoffe oder in die Härterkomponente (A) eingearbeitet werden.

Bei den erfindungsgemäßen Mehrkomponentensystemen werden die Härterkomponente (A) und die Bindemittelkomponente (B) erst kurz vor der Applikation miteinander vermischt.

Methodisch gesehen weisen das erfindungsgemäße Verfahren und die Herstellung der erfindungsgemäße Mehrkomponentensysteme aus den Komponenten (A) und (B) keine Besonderheiten auf, sondern können mit Hilfe der üblichen und bekannten Vorrichtungen zum Vermischen fester und flüssiger Komponenten, wie Rührkessel, Dissolver, Ultraturrax oder Extruder oder im Falle der Mehrkomponentensysteme mit Hilfe üblicher und bekannter Zwei- oder Mehrkomponenten-Dosier- und -mischanlagen durchgeführt werden.

Die Applikation der erfindungsgemäßen Beschichtungsstoffe kann durch alle üblichen Applikationsmeilioden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, elektrostatischer Sprühauftrag (ESTA), gegebenenfalls verbunden mit Heißspritzapplikation wie zum Beispiel Hot-Air-Heißspritzen. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs eintreten. So kann das Heißspritzen so ausgestaltet sein, daß der Beschichtungsstoff nur sehr kurz in der oder kurz vor der Spritzdüse erhitzt wird.

Die applizierten, nicht gehärteten Schichten weisen eine sehr gute Standsicherheit auf und neigen auch an senkrecht stehenden Oberflächen nicht zur Bildung von Läufern.

Die Aushärtung kann nach einer gewissen Ruhezeit erfolgen. Sie kann eine Dauer von 5 min bis 8 h, vorzugsweise 10 min bis 2 h und insbesondere 10 min bis 60 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 60°C unterstützt und/oder verkürzt werden, sofern hierbei keine Schädigungen oder Veränderungen der applizierten Schichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Die thermische Härtung kann auch stufenweise erfölgen. Vorteilhafterweise erfolgt sie bei einer Temperatur < 100 °C und bevorzugt < 90 °C während einer Zeit von 1 min bis zu 3 h, besonders bevorzugt 20 min bis zu 2,5 h und insbesondere 30 min bis 2 h.

Die resultierenden Grundierungen eignen sich sehr gut zur Beschichtung von Substraten aus den unterschiedlichsten Materialien, wie Metall, Kunststoff, Holz, Stein oder Beton oder Verbundmaterialien aus diesen Materialien. Die Grundierungen schützen die exponierten Teile solcher Substrate in hervorragender Weise vor der Schädigung durch mechanische Einwirkung. Sie sind insbesondere hervorragend als Steinschlagschutzgrundierungen für PKW und Nutzfahrzeugen geeignet. Ihre Steinschlagschutzwirkung behalten sie auch bei sehr tiefen Temperaturen auf Dauer bei.

### Beispiele und Vergleichsversuche

### Beispiele 1 und 2 und Vergleichsversuch V 1

### Die Herstellung erfindungsgemäßer Beschichtungsstoffe (Beispiele 1 und 2) und eines nicht erfindungsgemäßen Beschichtungsstoffs

Bei dem Beispiel 1 wurde ein erfindungsgemäßer Zweikomponentenbeschichtungsstoff (2K) aus den in der Tabelle 1 angegebenen Bestandteilen hergestellt.

Bei dem Beispiel 2 wurde ein erfindungsgemäßer Einkomponentenbeschichtungsstoff (1K) aus den in der Tabelle 1 angegebenen Bestandteilen hergestellt.

Bei dem Vergleichsversuch V 1 wurde ein nicht erfindungsgemäßer Zweikomponentenbeschichtungsstoff (2K) aus den in der Tabelle 1 angegebenen Bestandteilen hergestellt.

Bei dem Vergleichsversuch V 2 wurde ein nicht erfindungsgemäßer Einkomponentenbeschichtungsstoff (1K) aus den in der Tabelle 1 angegebenen Bestandteilen hergestellt.

Gemäß den in der Tabelle 1 angegebenen Gewichtsteilen wurde bei den Beispielen 1 und 2 und den Vergleichsversuchen V 1 und V 2 zunächst der anorganische Verdicker in einem Dissolver in deionisiertem Wasser aufgequollen. Danach wurden die restlichen Bestandteile in der in der Tabelle 1 angegebenen Reihenfolge unter Rühren zugesetzt und mittels eines Dissolverrührwerks während 20 Minuten dispergiert. Die Temperatur wurde beim Vermischen bei 40 bis 45°C gehalten. Nach dem Dispergieren wurden die Beschichtungsstoffe über 400 µm-Siebbeutel abgefüllt..

**Tabelle 1: Die stoffliche Zusammensetzung der erfindungsgemäßen Beschichtungsstoffe (Beispiele 1 und 2) und der nicht erfindungsgemäßen Beschichtungsstoffe (Vergleichsversuche V 1 und V 2)**

| **Bestandteil** | **Gewichtsteile:** | | | |
|---|---|---|---|---|
| | **Beispiele** | | **Vergleichsversuche** | |
| | **1 (2K)** | **2 (1K)** | **V 1 (2K)** | **V2 (1 K)** |
| Härterkomponente (A) oder Beschichtungsstoff: | | | | |
| Anorganischer Verdicker ^{a)} | 0,7 | 0,7 | 0,7 | 0,7 |
| Wasser | 11,5 | 12,5 | 11,5 | 12,5 |
| Eisenoxidschwarz | 1,1 | 1,2 | 1,1 | 1,2 |
| Titandioxid (Rutil) | 6,5 | 6,8 | 6,5 | 6,8 |
| Aliphatisches Polyamin ^{b)} | 7,8 | 3,0 | 7,8 | - |
| Butyldiglykol | 1,5 | 1,5 | 1,5 | 1,5 |
| Verdicker ^{c)} | 1,5 | 1,5 | 1,5 | 1,5 |
| Polyacrylatdispersion ^{d)} | 31,5 | 33,2 | 31,5 | 36,2 |
| Entschäumer ^{e)} | 0,5 | 0,5 | 0,5- | 0,5 |
| Netzmittel ^{f)} | 0,5 | 0,5 | 0,5 | 0,5 |
| Schwerspat | 20 | 21 | 20 | 21 |
| Feinteiliges festes Epoxidharz g) | 10 | 10,5 | - | - |
| Kaolin | - | - | 10 | 10,5 |
| Acrylatverdicker h) | 1,5 | 1,5 | 1,5 | 1,5 |
| Wasser | 5,4 | 5,6 | 5,4 | 5,6 |

| Bindemittelkomponente (B): | | | | |
|---|---|---|---|---|
| Epoxidharzdispersion ⁱ⁾ | 66 | - | 66 | - |
| Flüssiges Epoxidharz ^{j)} | 22 | - | 22 | - |
| Wasser | 12 | - | 12 | - |
| Mischungsverhältnis (A): (B) | 100 : 30 | - | 100 : 30 | - |

| | | | | |
|---|---|---|---|---|
| a) handelsübliches anorganisches Schichtsilikat (Bentone®); | | | | |
| b) handelsübliches aliphatisches Polyamin (80prozentig; Beckopox® EH 623); | | | | |
| c) handelsüblicher Verdicker auf Polyurethanbasis (Rheolate® 278); | | | | |
| d) handelsübliche Polyacrylatdispersion (Acronal® 290D); | | | | |
| e) handelsüblicher Entschäumer (Bevaloid® 681 FWG); | | | | |
| f) handelsübliches Netzmittel (Pigmentverteiler A); | | | | |
| g) pulverisiertes handelsübliches festes Epoxidharz, mittlere Teilchengröße 10 µm (DOW® DER 662); | | | | |
| h) handelsüblicher Verdicker auf Basis von Polyacrylat (25prozentig; Latekoll®); | | | | |
| i) handelsübliche Epoxidharzdispersion (53 %ig; Beckopox® EP 384); | | | | |
| j) handelsübliches flüssiges Epoxidharz (100%ig; Beckopox® EP 075). | | | | |

Die erfindungsgemäßen Beschichtungsstoffe der Beispiele 1 und 2 wiesen die gleiche hervorragende Lagerstabilität wie der Beschichtungsstoff des Vergleichsversuchs V 1 auf.

### Beispiele 3 und 4 und Vergleichsversuche V 3 und V 4

### Die Herstellung von erfindungsgemäßen Steinschlagschutzgrundierungen (Beispiele 3 und 4) und von nicht erfindungsgemäßen Steinschlagschutzgrundierungen (Vergleichsversuch V 3 und V 4)

Für das Beispiel 3 wurde der erfindungsgemäße Beschichtungsstoff gem. Beispiel 1 verwendet.

Für das Beispiel 4 wurde der erfindungsgemäße Beschichtungsstoff gem. Beispiel 2 verwendet.

Für den Vergleichsversuch V 3 wurde der nicht erfindungsgemäße Beschichtungsstoff gem. Vergleichsversuch V 1 verwendet.

Für den Vergleichsversuch V 4 wurde der nicht erfindungsgemäße Beschichtungsstoff gem. Vergleichsversuch V.2 verwendet.

Zur Herstellung der Steinschlagschutzgrundierungen des Beispiels 3 und des Vergleichsversuchs V 3 aus den Zweikomponentensystemen gem. Beispiel 1 und Vergleichsversuch V 1 wurden die jeweiligen Komponenten (A) und (B) im Gewichtsverhältnis von 100 : 3 sich miteinander vermischt (vgl. Tabelle 1).

Die Beschichtungsstoffe der Beispiele 1 und 2 und der Vergleichsversuche V 1 und V 2 (vgl. Tabelle 1) wurden mit einer Airlessanlage (Düsenöffnung: D. 0,5 mm; Farbdruck: 150 bar) bei 23°C und einer relativen Luftfeuchte von 60% auf Prüftafel aus Stahl, die mit einer kathodisch abgeschiedenen und thermisch gehärteten Elektrotauchlackierung beschichtet worden waren, appliziert. Die beschichteten Prüftafeln wurde während 15 Minuten bei Raumtemperatur abgelüftet und anschließend während 60 Minuten bei 80°C in einem Umluftofen getrocknet. Die resultierenden Steinschlagschutzgrundierungen, die eine Trockenschichtdicke von 500 µm aufwiesen, wurden während 3 h bei 60°C gealtert.

Die Prüftafel wurden während 24 h im Konstantklima nach DIN 50017 gelagert und nach 5 h der Regeneration bei Raumtemperatur geprüft.

Der Steinschlagtest wurde mit einem VDA-Steinschlagprüfgerät der Firma Erichsen durchgeführt (Stahlsplitt; Druck 1,5 bar; Bewertung: Angabe der Menge an Stahlsplitt in Kilogramm bis zum Durchschlag zum Substrat).

Die Standsicherheit wurde wie folgt getestet: Die Prüftafeln mit den applizierten Naßschichten unterschiedliche Dicke wurden senkrecht stellt, und es wurde jeweils im oberen Bereich der Prüftafeln ein waagerechter Strich in die Naßschichten gezogen. Anschließend wurden die Naßschichten bei 80°C in senkrechter Stellung eingebrannt. Es resultierten Steinschlagschutzgrundierungen von unterschiedlicher Trockenschichtdicke. Beurteilungskriterium für die Standsicherheit einer Steinschlagschutzgrundierung war die Trockenschichtdicke, bis zu der der Strich noch immer deutlich sichtbar und nicht zugelaufen war.

Die Testergebnisse finden sich in der Tabelle 2.

**Tabelle 2: Testergebnisse**

| **Test** | **Beispiele:** | | **Vergleichsversuche** | |
|---|---|---|---|---|
| | **3 (2K)** | **4 (1K)** | **V3 (2K)** | **V4 (1K)** |
| VDA-Steinschlag (kg bis Durchschlag bei 500 µm) | 250 | 80 | 100 | 30 |
| Standsicherheit (µm) | > 700 | > 700 | 500 | 600 |

Die Testergebnisse untermauern die sehr gute Standsicherheit der erfindungsgemäßen Beschichtungsstoffe und die hervorragende Steinschlagschutzwirkung der erfindungsgemäßen Steinschlagschutzgrundierungen.

## Patentansprüche

1. Steinschlagschutzgrundierung enthaltend einen wäßrigen Beschichtungsstoff, enthaltend mindestens ein Epoxidharz als Bindemittel und mindestens ein Polyamin als Härter, **dadurch gekennzeichnet, daß** das Epoxidharz oder mindestens eines der Epoxidharze
(i) als solches bei Raumtemperatur fest ist und/oder in einem Pulverlack vorliegt, wobei
(ii) das feste Epoxidharz und/oder der epoxidharzhaltige Pulverlack in einer wäßrigen Dispersion, enthaltend das Polyamin oder die Polyamine, feinteilig dispergiert ist oder sind,
wobei das feste Epoxidharz und/oder der Pulverlack in einer Menge enthalten ist, die, bezogen auf den Festkörper des wäßrigen Beschichtungsstoffs, 2 bis 30 Gew.-% an Epoxidharz als Reaktivkomponente entspricht.

2. Steinschlagschutzgrundierung nach Anspruch 1, **dadurch gekennzeichnet, daß** es sich um ein Einkomponentensystem handelt.

3. Steinschlagschutzgrundierung nach Anspruch 1, **dadurch gekennzeichnet, daß** es sich um ein Mehrkomponentensystem handelt, enthaltend
(A) mindestens eine polyaminhaltige wäßrige Dispersion oder Lösung als Härterkomponente und
(B) mindestens eine epoxidharzhaltige wäßrige Dispersion als Bindemittekomponente,
worin das feste Epoxidharz und/oder der epoxidharzhaltige Pulverlack in der Härterkomponente (A) feinteilig dispergiert vorliegt.

4. Steinschlagschutzgrundierung nach einem der Ansprüche 1 bis 3, **dadurch gekennzeichnet, daß** sie das feste Epoxidharz, alleine verwendet, in einer Menge von, bezogen auf seinen Festkörper, 2 bis 30 Gew.-% enthält.

5. Steinschlagschutzgrundierung nach einem der Ansprüche 1 bis 3, **dadurch gekennzeichnet, daß** sie den epoxidharzhaltigen Pulverlack, alleine verwendet, in einer Menge von, bezogen auf seinen Festkörper, 5 bis 30 Gew.-% enthält.

6. Steinschlagschutzgrundierung nach einem der Ansprüche 1 bis 3 oder 5, **dadurch gekennzeichnet, daß** sie epoxidharzhaltige Pulverlack mindestens ein Epoxidharz in einer Menge von, bezogen auf den Pulverlack, mindestens 40 Gew.-% enthält.

7. Steinschlagschutzgrundierung nach einem der Ansprüche 1 bis 3, 5 oder 6, **dadurch gekennzeichnet, daß** der epoxidharzhaltige Pulverlack eine mittlere Teilchengröße von 3 bis 35 µm aufweist.

8. Steinschlagschutzgrundierung nach einem der Ansprüche 1 bis 3 oder 5 bis 7, **dadurch gekennzeichnet, daß** der epoxidharzhaltige Pulverlack eine Teilchengröße < 70 µm aufweist.

9. Steinschlagschutzgrundierung nach einem der Ansprüche 1 bis 4, **dadurch gekennzeichnet, daß** das feste Epoxidharz eine Teilchengröße < 70 µm aufweist.

10. Steinschlagschutzgrundierung nach Anspruch 9, **dadurch gekennzeichnet, daß** das feste Epoxidharz eine mittlere Teilchengröße von 5 bis 35 µm aufweist.

11. Steinschlagschutzgrundierung nach einem der Ansprüche 1 bis 10, **dadurch gekennzeichnet, daß** sie mindestens eine physikalisch härtende Polymerdispersion enthält.

12. Verfahren zur Herstellung der Steinschlagschutzgrundierung gemäß einem der Ansprüche 1 bis 11, **dadurch gekennzeichnet, daß** man mindestens ein feinteiliges, bei Raumtemperatur festes Epoxidharz und/oder mindestens einen epoxidharzhaltigen Pulverlack in der Gegenwart mindestens eines Polyamins in einem wäßrigen Medium dispergiert, wobei das feste Epoxidharz und/oder der Pulvedack in einer Menge enthalten ist, die, bezogen auf den Festkörper des wäßrigen Beschichtungsstoffs, 2 bis 30 Gew.-% an Epoxidharz als Reaktivkomponente entspricht.

13. Verwendung der Steinschlagschutzgrundierung nach einem der Ansprüche 1 bis 11 für PKW und Nutzfahrzeuge.

## Claims

1. Antistonechip primer comprising an aqueous coating material comprising at least one epoxy resin as binder and at least one polyamine as curing agent, **characterized in that** said epoxy resin or at least one of the epoxy resins
(i) is solid per se at room temperature and/or is present in a powder coating material, and
(ii) the solid epoxy resin and/or the epoxy resin powder coating material is or are present in fine dispersion in an aqueous dispersion comprising the polyamine or polyamines, comprising the solid epoxy resin and/or the powder coating material in an amount which corresponds, based on the solids of the aqueous coating material, to from 2 to 30% by weight of epoxy resin as reactive component.

2. Antistonechip primer according to Claim 1, **characterized in that** it comprises a one-component system.

3. Antistonechip primer according to Claim 1, **characterized in that** it comprises a multicomponent system comprising
(A) at least one polyamine-containing aqueous dispersion or solution as curing component and
(B) at least one epoxy resin-containing aqueous dispersion as binder component,
the solid epoxy resin and/or the epoxy resin powder coating material being present in fine dispersion in the curing component (A).

4. Antistonechip primer according to any of Claims 1 to 3, **characterized in that** it comprises the solid epoxy resin, used alone, in an amount of from 2 to 30% by weight based on its solids.

5. Antistonechip primer according to any of Claims 1 to 3, **characterized in that** it comprises the epoxy resin powder coating material, used alone, in an amount of from 5 to 30% by weight, based on its solids.

6. Antistonechip primer according to any of Claims 1 to 3 and 5, **characterized in that** the epoxy resin powder coating material comprises at least one epoxy resin in an amount of at least 40% by weight, based on the powder coating material.

7. Antistonechip primer according to any of Claims 1 to 3, 5 and 6, **characterized in that** the epoxy resin powder coating material has an average particle size of from 3 to 35 µm.

8. Antistonechip primer according to any of Claims 1 to 3 and 5 to 7, **characterized in that** the epoxy resin powder coating material has a particle size < 70 µm.

9. Antistonechip primer according to any of Claims 1 to 4, **characterized in that** the solid epoxy resin has a particle size < 70 µm.

10. Antistonechip primer according to Claim 9, **characterized in that** the solid epoxy resin has an average particle size of from 5 to 35 µm.

11. Antistonechip primer according to any of Claims 1 to 10, **characterized in that** it comprises at least one physically curing polymer dispersion.

12. Process for preparing antistonechip primer according to any of Claims 1 to 11, **characterized in that** at least one finely divided epoxy resin which is solid at room temperature and/or at least one epoxy resin powder coating material is dispersed in an aqueous medium in the presence of at least one polyamine, comprising the solid epoxy resin and/or the powder coating material in an amount which corresponds, based on the solids of the aqueous coating material, to from 2 to 30% by weight of epoxy resin as reactive component.

13. Use of the antistonechip primer according to any of Claims 1 to 11 for automobiles and commercial vehicles.

## Revendications

1. Primaire de protection contre les impacts de gravillons contenant une substance de revêtement aqueuse, contenant au moins une résine époxyde comme liant et au moins une polyamine comme durcissant, **caractérisé en ce que** la résine époxyde ou au moins une des résines époxydes
(i) est solide telle quelle à température ambiante et/ou se présente sous la forme d'un vernis en poudre, auquel cas
(ii) la résine époxyde solide et/ou le vernis en poudre contenant une résine époxyde sont finement dispersés dans une dispersion aqueuse contenant la ou les polyamines,
la résine époxyde solide et/ou le vernis en poudre étant contenus dans une quantité qui, par rapport aux matières solides de la substance de revêtement aqueuse, correspond à 2 à 30% en poids de résine époxyde comme composant réactif.

2. Primaire de protection contre les impacts de gravillons selon la revendication 1, **caractérisé en ce qu'**il s'agit d'un système à un seul composant.

3. Primaire de protection contre les impacts de gravillons selon la revendication 1, **caractérisé en ce qu'**il s'agit d'un système à plusieurs composants, contenant
(A) au moins une dispersion ou solution aqueuse polyaminée comme composant durcisseur et
(B) au moins une dispersion aqueuse contenant une résine époxyde comme composant liant,
dans lequel la résine époxyde solide et/ou le vernis en poudre contenant de la résine époxyde sont présents sous forme finement dispersée dans le composant durcisseur (A).

4. Primaire de protection contre les impacts de gravillons selon l'une des revendications 1 à 3, **caractérisé en ce qu'**il utilise la résine époxyde solide seule dans une quantité de 2 à 30% en poids par rapport à ses matières solides.

5. Primaire de protection contre les impacts de gravillons selon l'une des revendications 1 à 3, **caractérisé en ce qu'**il utilise le vernis en poudre contenant de la résine époxyde seule, dans une quantité de 5 à 30% en poids par rapport à ses matières solides.

6. Primaire de protection contre les impacts de gravillons selon l'une des revendications 1 à 3 ou 5, **caractérisé en ce que** le vernis en poudre contenant de la résine époxyde contient au moins une résine époxyde dans une quantité d'au moins 40% en poids par rapport au vernis en poudre.

7. Primaire de protection contre les impacts de gravillons selon l'une des revendications 1 à 3, 5 ou 6, **caractérisé en ce que** le vernis en poudre contenant de la résine époxyde présente une taille moyenne des particules de 3 à 35 µm.

8. Primaire de protection contre les impacts de gravillons selon l'une des revendications 1 à 3 ou 5 à 7, **caractérisé en ce que** le vernis en poudre contenant de la résine époxyde présente une taille moyenne des particules < 70 µm.

9. Primaire de protection contre les impacts de gravillons selon l'une des revendications 1 à 4, **caractérisé en ce que** la résine époxyde solide présente une taille des particules < 70 µm.

10. Primaire de protection contre les impacts de gravillons selon la revendication 9, **caractérisé en ce que** la résine époxyde solide présente une taille moyenne des particules de 5 à 35 µm.

11. Primaire de protection contre les impacts de gravillons selon l'une des revendications 1 à 10, **caractérisé en ce qu'**il contient au moins une dispersion polymère durcissant physiquement.

12. Procédé de préparation d'un primaire de protection contre les impacts de gravillons selon l'une des revendications 1 à 11, **caractérisé en ce que** l'on disperse au moins une résine époxyde en fines particules solide à température ambiante et/ou au moins un vernis en poudre contenant de la résine époxyde en présence d'au moins une polyamine dans un support aqueux, la résine époxyde solide et/ou le vernis en poudre étant contenus dans une quantité qui correspond à 2 à 30% en poids de résine époxyde comme composant réactif par rapport aux matières solides de la substance de revêtement aqueuse.

13. Utilisation du primaire de protection contre les impacts de gravillons selon l'une des revendications 1 à 11 pour des voitures et véhicules utilitaires.
